# EUROPEAN PATENT APPLICATION

(11) **EP 1 184 112 A1**
(43) Date of publication of application: **06.03.2002**
(21) Application number: 01904488.2
(22) Date of filing: 15.02.2001
(51) Int. Cl.: B23B 31/177

(54) **CHUCK DEVICE**

(30) Priority: 13.03.2000 JP 2000068698
(71) Applicant: Pascal Kabushiki Kaisha, Itami-shi, Hyogo-ken 664-0006 (JP)
(72) Inventor: KURODA, Takayuki, Itami-shi, Hyogo 664-0006 (JP)
(74) Representative: Senior, Alan Murray
(86) International application number: PCT/JP01/01101
(87) International publication number: WO 01/68299

(57) **Abstract**

A chuck device (1) includes: a worm gear mechanism (5) decelerating a rotational drive force applied through an input shaft member (4); a second gear mechanism (6) using the rotational drive force transferred from the worm gear mechanism (5) to drive a screw shaft member (46) in the axial direction; and a conversion mechanism (7) redirecting the axial drive force transferred by the screw shaft member (46) to drive a pair of claw members (3) symmetrically. Thus, the rotational drive force applied through the input shaft member (4) is increased by the worm gear mechanism (5) and the second gear mechanism (6), and this rotational drive force is redirected by the conversion mechanism (7) and transferred to the claw members (3), allowing a workpiece or tool to be firmly chucked.

## Description

### Technical field

The present invention relates to a chuck device. More specifically, the present invention relates to a chuck device equipped with a gear mechanism that increases rotational drive force applied through an input member.

### Background technology

Conventionally, in machine tools such as milling machines, lathes, and machining centers, a chuck device is used to secure a workpiece to a table, work pallet, or the like, or to mount a tool to the principle axis, or the like. A chucking device essentially includes a base member secured to a table, a work pallet, a primary axis, or the like, and a claw member movably mounted on this base member. This claw member is moved so that the workpiece or tool is chucked. Conventionally, one-claw chuck devices with a single claw member, two-claw chuck devices with two claw members, and three-claw chuck devices with three claw members have been used practically.

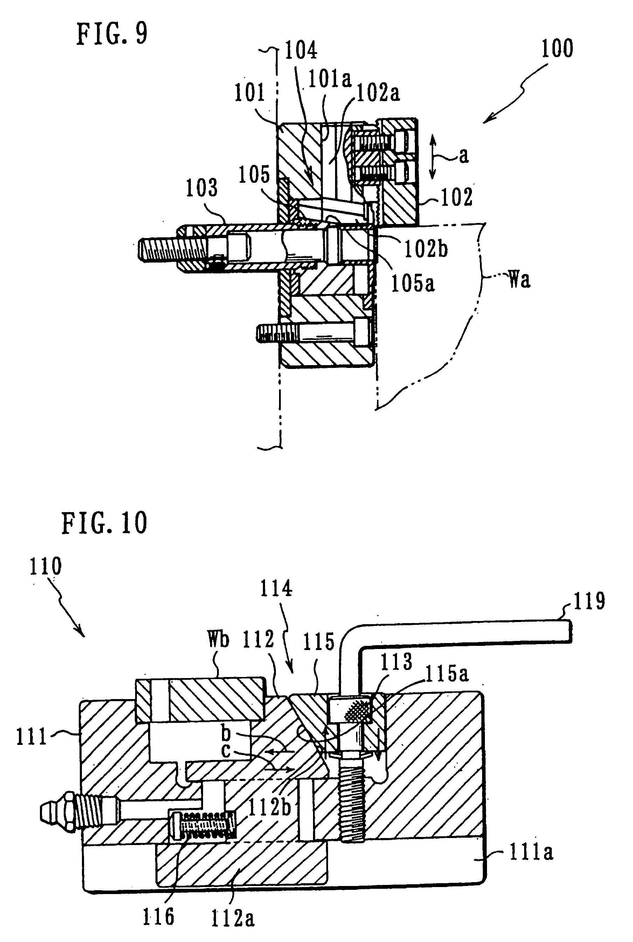

Referring to Fig. 9, for example, a chuck device 100, used to secure a workpiece Wa, includes a base member 101, a claw member 102, an input shaft member 103, a conversion mechanism 104, and a hydraulic cylinder (not shown in the figure). A leg 102a of the claw member 102 slidably engages with a T-shaped groove 101a formed on the base member 101. The input shaft member 103 extends from inside the base member 101 and projects from the side opposite from the claw member 102. The outer end is connected to the hydraulic cylinder.

The conversion mechanism 104 includes: a conversion member 105 secured to the input shaft member 103; a sloped engagement groove 105a formed on the conversion member 105 with a T-shaped cross-section shape and sloped relative to the direction of motion of the claw member 102; and an engagement section 102b disposed on the claw member 102 to slidably engage with the sloped engagement groove 105a. The hydraulic cylinder drives the input shaft member 103 and the conversion member 105 in the axial direction, and this axial drive force is redirected by the conversion mechanism 104 and transferred to the claw member 102, causing the claw member 102 to move in the direction of the arrow a.

Referring to Fig. 10, a chuck device 110 implemented by the present applicants includes a base member 111, a claw member 112, an input member 113, and a conversion mechanism 114. A leg 112a of the claw member 112 slidably engages with aT-shaped groove 111a formed on the base member 111. The input member 113, formed as a bolt, is screwed into the base member 113, and a rotational drive force is applied manually to the input member 113 using a rotation tool 119.

The conversion mechanism 114 includes: a conversion member 115 into which the shaft of the input member 113 is inserted and which engages with the head of the input member 113; a sloped surface 115a formed on the conversion member 115 and sloped relative to the direction of movement of the claw member 112; a sloped surface 112b formed on the claw member 112 to form a planar contact with the sloped surface 115a; and a compression spring 116 elastically biasing the claw member 112 toward the input member 113. If the input member 113 is rotated in the tightening direction, the conversion member 115 is driven downward, and the claw member 112 is moved in the direction of the arrow b via the conversion mechanism 114, thus securing the workpiece W. If the input member 113 is rotated in the loosening direction, the biasing force of the compression spring 116 causes the claw member 112 to move in the direction of the arrow c.

In conventional chuck devices, the drive force applied through the input member can be increased (multiplied) by a conversion mechanism to drive a claw member. However, the increase in drive force applied through the input member is limited if only sloped engagement grooves and sloped surfaces are used in the conversion mechanism for increasing drive force. This makes it difficult to provide a high force increase ratio (multiplication rate).

As a result, with chuck devices in which an input member is manually driven, the workpiece or tool cannot be firmly chucked. This can lead to reduced machining precision and damage to cutting tools. Thus, firmly driving the input member manually results in reduced ease of use and lowers the efficiency of the chucking operation. Also, repeating this chucking operation will lead to fatigued arms and hands. With chuck devices that drive the input member using an actuator such as a hydraulic cylinder, the actuator makes the chuck device larger and increases production costs.

However, increasing the slopes of the sloped engagement groove and the sloped surface of the conversion member in the conversion mechanism can improve the rate at which the drive force is increased. However, the ratio of the displacement of the claw member to the displacement of the conversion member becomes very small. This limits the size of the workpiece, tool, or the like that can be chucked, thus reducing its versatility.

The object of the present invention is to provide a chuck device that can improve the increase rate of the applied drive force. Another object of the present invention is to provide a chuck device that improves usability and increases the efficiency of chucking operations. Yet another object of the present invention is to provide a chuck device that can be designed compactly. Yet another object of the present invention is to provide a highly versatile chuck device.

### Disclosure of the invention

The present invention provides a chuck device for chucking a workpiece or a tool by moving a claw member. The chuck device includes a base member and at least one claw member movably mounted on the base member. The chuck device also includes: an input member for applying a rotational drive force; a gear mechanism using a rotational drive force applied through the input member to drive a screw shaft member in an axial direction; and a conversion mechanism redirecting an axial drive force transferred through the screw shaft member and driving a claw member.

When rotational drive force is applied through the input member, the rotational drive force drives the screw shaft member in the axial direction via a gear mechanism. The axial drive force transferred to the screw shaft member is redirected by a conversion mechanism and transferred to the claw member, moving the claw member. The gear mechanism allows the rotational drive force applied through the input member to be significantly increased and transferred to the screw shaft member.

Since the drive force applied to the input member can be multiplied significantly and transferred to the claw member, a workpiece or tool can be firmly chucked by the claw member by applying a relatively small drive force to the input member. This improves the efficiency of chucking operations.

If an actuator is used to drive the input member, a relatively small actuator can be used, thus allowing the chuck device to be compact and reducing production costs.

A high drive rate increase ratio can be provided without excessively increasing the ratio of the displacement stroke of the screw shaft member or the like to the displacement stroke of the claw member.

In the chuck device described above, the gear mechanism can include a worm gear mechanism for slowing down the rotational drive force applied through the input member and a second gear mechanism that uses the rotational drive force transferred from the worm gear mechanism to drive the screw shaft member in an axial direction. In this chuck device, the worm gear mechanism significantly increases the rotational drive force applied to the input member. The rotational drive force increased by the worm gear mechanism is further increased by the second gear mechanism, which transfers the drive force to the screw shaft member, driving it in the axial direction.

It would be desirable for the conversion mechanism to include: a conversion member secured to the screw shaft member and not rotating relative to the base member; a sloped engagement groove formed on the conversion member and sloped relative to a direction of motion of the claw member; and an engagement section disposed on the claw member and slidably engaging with the sloped engagement groove. When the screw shaft member is driven in the axial direction, the conversion mechanism drives the conversion member integrally with the screw shaft member, changing the engagement position of the engagement section in the sloped engagement groove. As a result, the drive force in the axial direction from the screw shaft member is multiplied and transferred to the claw member.

The chuck device can be formed in the following manner. A pair of claw members are disposed facing each other, legs. of the claw members are slidably engaged with a shared engagement groove formed on the base member, and the conversion mechanism is formed to move the pair of claw members symmetrically. Alternatively, a single claw member can be disposed on the chuck device.

The input member of the chuck device can be driven manually. Alternatively, a small electrical or hydraulic actuator can be used to drive the input member.

### Brief description of the drawings

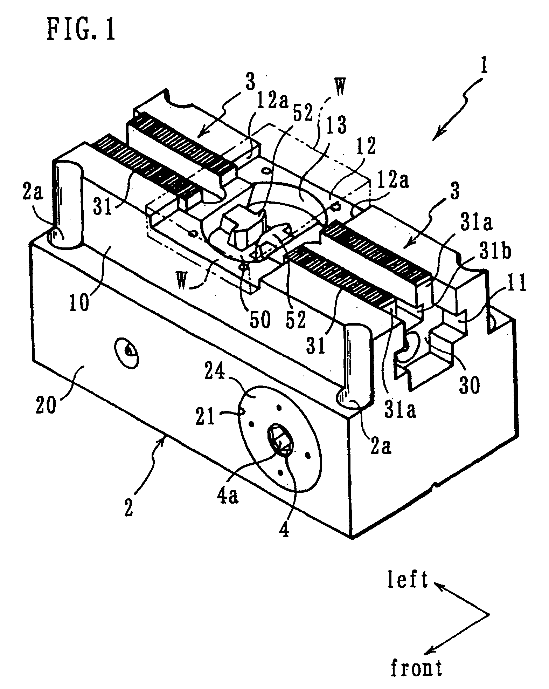

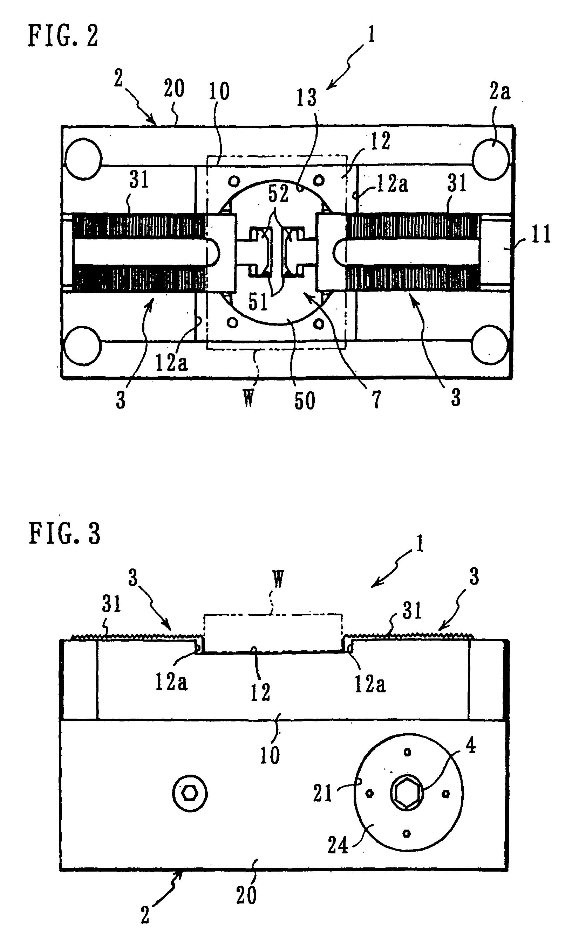

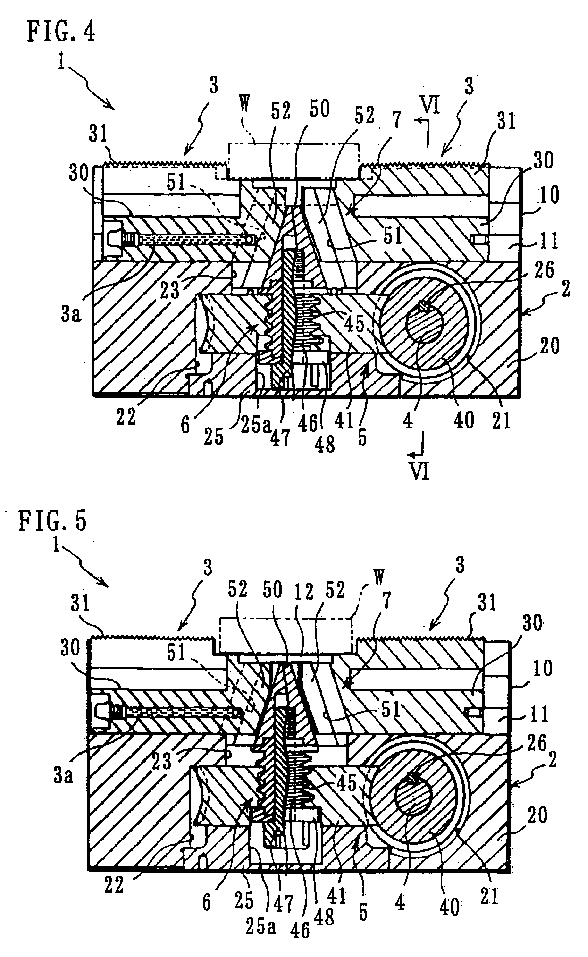

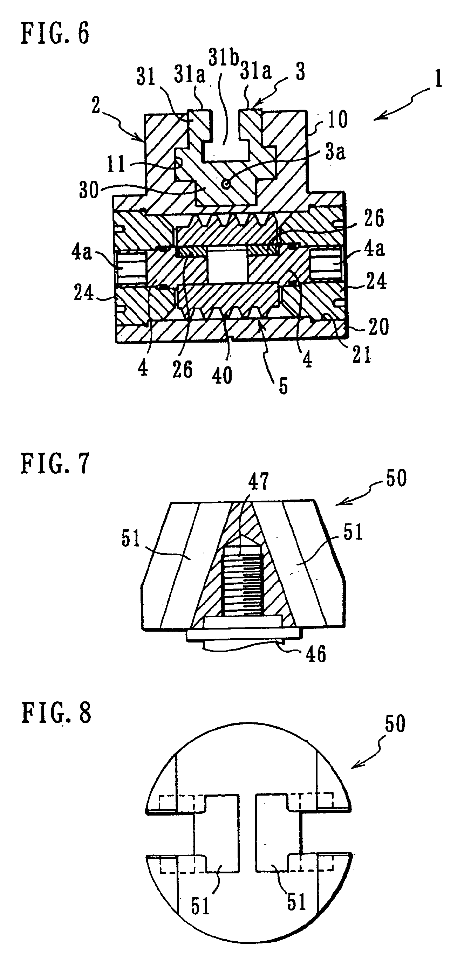

Fig. 1 is a perspective drawing of an embodiment of the present invention. Fig. 2 is a plan drawing of a chuck device. Fig. 3 is a front-view drawing of a chuck device. Fig. 4 is a vertical cross-section drawing of a chuck device (in a chucked state). Fig. 5 is a vertical cross-section drawing of a chuck device (in an unchucked state). Fig. 6 is a cross-section drawing along the VI-VI line in Fig. 4. Fig. 7 is a vertical cross-section drawing of a conversion member. Fig. 8 is a plan drawing of a conversion member. Fig. 9 is a vertical cross-section drawing of a chuck device according to a conventional technology. Fig. 10 is a vertical cross-section drawing of a chuck device according to another conventional technology.

### Preferred embodiments of the invention

Referring to the figures, the following is a description of an embodiment of the present invention.

This embodiment is an example of the present invention implemented in a two-claw chuck device equipped with a pair of claw members disposed symmetrically. These claw members are moved to chuck a workpiece, securing it to the table of a machine tool or the like.

Referring to Fig. 1 through Fig. 6, a two-claw chuck device 1 includes a base member 2, left and right claw members 3, input shaft members 4, a worm gear mechanism 5, a second gear mechanism 6, and a conversion mechanism 7. With this chuck device 1, the input shaft member 4 is rotated manually so that the drive force is transferred to the left and right claw members via the worm gear mechanism 5, the second gear mechanism 6, and the conversion mechanism 7, thus moving the claws 3 symmetrically.

Referring to Fig. 1 through Fig. 6, the base member 2 forms a wide rectangular shape when seen from above. The base member 2 includes an upper block 10 and a lower block 20 formed integrally thereto. The lower block 20 is formed slightly wider than the upper block 10. The claw members 3 are movably mounted on the upper surface (upper surface section) of the upper block 10. Four bolt holes 2a are formed at the corner areas of the lower block 20. Four bolts (not shown in the figures) inserted into these bolt holes 2a secure the base member 2 to the table of the machine tool (not shown in the figure) or the like.

An engagement groove 11 having a roughly T-shaped cross-section shape is formed on the upper block 10 extending along the left-right axis. Legs 30 of the pair of claw members 3 are slidably engaged with this shared engagement groove 11. The upper block 10 is formed with a lowered section 12 via a shelf 12a at the central section along the left-right axis. A vertical hole 13 communicating with the engagement groove 11 is formed extending downward from the lowered section 12.

The pair of claw members 3 are formed symmetrically to the left and the right. Each claw member 3 includes: the leg 30; a main claw unit 31 disposed above the leg 30; and an engagement section 52 disposed at the end of the leg 30 toward the lowered section 12. The main claw unit 31 is formed from front and rear claw sections 31a extending upward from the upper end of the leg 30. A groove 31b is formed inside the main claw unit 3, surrounded by the claw sections 31a and the upper end of the leg 30. The front and rear claw sections 3a extend parallel to each other along the left-right axis. The upper ends of the front and rear claw sections 3a of the left and right claw members 3 face each other and the facing ends of the left and right claw sections 31a serve to chuck a workpiece W disposed on the lowered section 12 by supporting it from both ends.

A horizontal hole 21 on the right side of the lower block 20 of the base member 2 extends from the front to the rear. A vertical hole 22 extends from the bottom of the lower block 20 at the central area thereof. The right end of the vertical hole 22 communicates with the horizontal hole 21. A vertical hole 23 is formed upward from the upper end of the vertical hole 22, and the vertical hole 23 communicates with the vertical hole 13. A pair of covers 24 are fitted into the front and rear ends of the horizontal hole 21, and a cover 25 is fitted into the bottom of the vertical hole 22.

Referring to Fig. 1 and Fig. 3 through Fig. 6, the input shaft members 4 is a member used to input rotational drive force. The front and rear input shaft members are disposed in the horizontal hole 21 of the base member 2. Each input shaft member 4 is fitted in and rotatably supported by the cover 24. A worm gear 40 of the worm gear mechanism 5 is disposed in the horizontal hole 21. The inner ends of the input shaft members 4 are inserted into the worm gear 40, and the input shaft members 4 are linked to the worm gear 40 via a key member 26 in a manner that prevents rotation relative to each other.

An angular hole 4a, e.g., a hexagonal hole, is formed at the outer end of the input shaft member 4. The end of a rotation tool such as a hexagonal wrench is engaged with the angular hole 4a, and the input shaft member 4 is manually rotated via this rotation tool to input rotational drive force. The input shaft member 4 is prevented from slipping out by the cover 24.

Referring to Fig. 4 through Fig. 6, the worm gear mechanism 5 is a mechanism for increasing drive torque by slowing down the rotational drive force input via the input shaft member 4.

The worm gear mechanism 5 is mounted inside the base member 2. This worm gear mechanism 5 includes the worm gear 40, which rotates integrally with the input shaft members 4, and a worm wheel 41, which meshes with the worm gear 40. The worm wheel 41 is disposed inside the vertical hole 22 of the base member 2, and is rotatably supported by the base member 2 and the cover 25 while being prevented from moving along its axis. The worm wheel 41 is rotatably fitted and screwed to a screw shaft member 46 of the second gear mechanism 6.

Referring to Fig. 4 and Fig. 5, the second gear mechanism 6 is a mechanism for driving the screw shaft member 46 axially using the rotational drive force transferred from the worm gear mechanism 5.

The second gear mechanism 6 is mounted in the base member 2. This second gear mechanism 6 includes a threaded hole 45 formed concentric to the center of the worm wheel 41 and the screw shaft member 46 screwed to the threaded hole 45. A bolt 47 is inserted from below into the center of the screw shaft member 46, and the threaded section of the bolt 47 projecting upward from the screw shaft member 46 is linked to a conversion member 50 of the conversion mechanism 7 so that the screw shaft member 46 and the conversion member 50 are linked in a fixed manner.

A collar member 48 is secured between the screw shaft member 46 and the head of the bolt 47. This collar member 48 has a diameter that is slightly less than that of a hole 25a of the cover 25. When the screw shaft member 46 is in a lowered state, the collar member 48 fits into the hole 25a, and the axial center of the screw shaft member 46 and the rotational center of the worm wheel 41 are placed in fixed positions.

Referring to Fig. 1, Fig. 2, Fig. 4, and Fig. 5, the conversion mechanism 7 changes the direction of the axial drive force transferred by the screw shaft member 46 and transfers this force to the pair of claw members 3, moving these left and right claw members 3 symmetrically. This conversion mechanism 7 includes the conversion member 50, a sloped engagement groove 51, and a pair of engagement sections 52.

The conversion member 50 is secured to the screw shaft member 46 by the bolt 47. This conversion member 50 is disposed within the vertical holes 13, 23 of the base member 2. The conversion member 50 is formed with a pair of T-shaped sloped engagement groove 51 sloped in the direction of movement of the claw members 3. The pair of claw members 3 are formed with a pair of engagement sections 52 to slidably engage with the pair of sloped engagement grooves 51. Since the pair of engagement sections 52 engage with the pair of sloped engagement grooves 51, the conversion member 50 is prevented from rotating relative to the base member 2.

Referring to Fig. 7 and Fig. 8, the sloped engagement grooves 51 are sloped at approximately 70 degrees relative to the direction of motion of the claw members 3 (the horizontal direction) so that the lower the grooves are, the further they are from the axial center of the conversion member 50. The lower the conversion member 50 and the screw shaft member 46 go, the closer the pair of claw members 3 approach each other. Conversely, the higher the conversion member 50 and the screw shaft member 46 are, the further apart the pair of claw members 3 move. The legs 30 of the claw members 3 are formed with grease holes 3a. Grease in these grease holes 3a is fed between the sloped engagement grooves 51 and the engagement sections 52.

The operations and advantages of the two-claw chuck device 1 will be described.

Referring to Fig. 5, when chucking the workpiece W, the conversion member 50 is first moved upward so that there is adequate space between the pair of claw members 3. The workpiece W is then set onto the lowered section 12. Referring to Fig. 5, the conversion member 50 is moved to the uppermost position and the pair of claw members 3 are positioned so that they are separated by the maximum distance. However, when setting the workpiece W, the pair of claw members 3 does not necessarily need to be separated by the maximum distance.

Next, the end of a rotation tool such as a hexagonal wrench is engaged with the angular hole 4a of the input shaft member 4, and the input shaft member 4 is manually rotated with the rotation tool so that the pair of claw members 3 move toward each other. In the worm gear mechanism 5, the worm gear 40 rotates integrally with. the input shaft member 4, and the worm wheel 41 meshed with the worm gear 40 rotates around the vertical axis.

In the second gear mechanism 6, the worm wheel 41 cannot move vertically when the worm wheel 41 is rotated, so the screw shaft member 46 screwed to the threaded hole 45 of the worm wheel 41 is driven downward, and the conversion member 50 secured to the screw shaft member 46 is driven downward as well.

In the conversion mechanism 7, when the conversion member 50 moves downward the operation of the sloped engagement grooves 51 of the conversion member 50 and the pair of engagement sections 52 cause the pair of claw members 3 to come closer, i.e., move toward the workpiece W. As shown in Fig. 4, the upper ends of the claw sections 31a of the pair of claw members 3 firmly chuck the workpiece W from the left and right. Machining is then performed on the workpiece W from this chucked state.

When removing the workpiece W, the rotation tool is used to rotate the input shaft member 4 in the opposite direction so that the claw members 3 move away from each other. The rotation causes the screw shaft member 46 to move upward via the worm gear mechanism 5 and the second gear mechanism 6. This causes the conversion member 50 secured to the screw shaft member 46 to move upward as well, driving the claw members 3 away from each other via the conversion mechanism 7. This releases the chucked state.

According to this chuck device 1, the worm gear mechanism 5 allows the rotational drive force input through the input shaft member 4 to be significantly increased (multiplied).
Furthermore, the second gear mechanism 6 increases the rotational drive force transferred from the worm gear mechanism 5 and transfers it to the screw shaft member 46, driving the screw shaft member 46 in the axial direction. The axial drive force transferred by the screw shaft member 46 is redirected and increased by the conversion mechanism 7 and is transferred to the pair of claw members 3. This causes the claw members 3 to move symmetrically.

By providing the worm gear mechanism 5, the second gear mechanism 6, and the conversion mechanism 7 as described above, the drive force input through the input shaft member 4 can be increased in three stages and then transferred to the pair of claw members 3. As a result, simply applying a manual drive torque to the input shaft member 4 can firmly chuck the workpiece W. As a result, the usability of the chuck device can be improved and chucking operations on the workpiece W can be made more efficient, thus preventing reduced machining precision and damage to cutting tools.

A high ratio for increasing the drive force can be provided even without a very large ratio between the displacement stroke of the claw members 3 and the displacement strokes of the conversion member 50 and the screw shaft member 46.

Since the pair of claw members 3 is mounted on the upper surface of the base member 2 and the worm gear mechanism 5 and the second gear mechanism 6 are mounted inside the base member 2, the structure for increasing the drive force can be made compact. Also, entry of debris into the gear mechanisms 5, 6 can be prevented.

Since the claw members 3 are disposed facing each other and the legs 30 of the claw members 3 are slidably engaged with the shared engagement groove 11 formed in the base member 2, the shared engagement groove 11 can reliably guide and support the claw members 3 along their axis of motion. As a result, the workpiece W can be reliably chucked by being supported from either side by the claw members 3.

Next, examples of partial modifications to the above embodiment will be described.
1) The worm gear mechanism 5 can be omitted. If this is done, a rotation member is provided to substitute for the worm wheel 41, and the screw shaft member 46 is screwed into a threaded hole formed in this rotation member. Some sort of input member to input rotational drive force can be provided to rotate this rotation member, so that the screw shaft member 46 is driven axially.
2) Instead of the pair of claw members 3, a single claw member can be provided, and the workpiece can be chucked by supporting it between the claw member and a receiving section of the base member. Alternatively, three claw members can be provided, and the workpiece can be chucked using these three claw members. Changes in the number of claw. members can be easily handled simply by changing the number and positions of the sloped engagement grooves formed on the conversion member in the conversion mechanism.
3) The input shaft member 4 can be rotated by an actuator such as a motor to apply rotational drive force through the input shaft member 4. Since rotation of the input shaft member 4 does not require a high drive force, the actuator can be compact, thus allowing the chuck device to be compact and reducing production costs.
4) An upper plate, used to chuck the workpiece by supporting it in cooperation with one of the claw members 3, can be secured to the lowered section 12 using bolts screwed into the lowered section 12. In this case, the other claw member 3 would not be used. However, by mounting the upper plate for workpieces having certain shapes, it would be possible to chuck workpieces smaller than the workpieces W chucked by the pair of claw members 3. Furthermore, after the upper plate is mounted, the upper plate can be cut into a shape corresponding to the shape of the workpiece using machine tools or the like. This provides reliable chucking for different workpiece shapes.
5) Various other modifications may be effected without departing from the spirit of the present invention. Also, the present invention can be used in chuck devices that secure the work piece to a rotating body of a machine tool or that secure tools to the principle axis.

### Possible uses in industry

With the chuck device according to the present invention as described above, a light manual drive force can be applied to drive the claw members forcefully and provide firm chucking of workpieces or the like. Thus, a compact and high-performance chuck device for providing workpieces and tools is provided, and chucking operations can be made more efficient.

## Claims

1. In a chuck device, including a base member and at least one claw member movably mounted on said base member, for chucking a workpiece or a tool by moving said claw member,
a chuck device comprising:
an input member for applying a rotational drive force;
a gear mechanism using a rotational drive force applied through said input member to drive a screw shaft member in an axial direction; and
a conversion mechanism redirecting an axial drive force transferred through said screw shaft member and driving a claw member.

2. In a chuck device, including a base member and at least one claw member movably mounted on said base member, for chucking a workpiece or a tool by moving said claw member,
a chuck device comprising:
an input member for applying a rotational drive force;
a worm gear mechanism slowing down a rotational drive force applied through said input member;
a second gear mechanism using a rotational drive force transferred from said worm gear mechanism to drive a screw shaft member in an axial direction; and
a conversion mechanism redirecting an axial drive force transferred through said screw shaft member and driving a claw member.

3. A chuck device as described in claim 2 wherein:
said worm gear mechanism includes a worm gear rotating integrally with said input member and a worm wheel meshing with said worm gear; and
said second gear mechanism includes a threaded hole formed concentrically with a center of a worm wheel and said screw shaft member screwed into said threaded hole.

4. A chuck device as described in claim 2 wherein said conversion mechanism includes: a conversion member secured to said screw shaft member and not rotating relative to said base member; a sloped engagement groove formed on said conversion member and sloped relative to a direction of motion of said claw member; and an engagement section disposed on said claw member and slidably engaging with said sloped engagement groove.

5. A chuck device as described in any one of claim 2 through claim 4 wherein:
a pair of claw members are disposed facing each other;
legs of said claw members are slidably engaged with a shared engagement groove formed on said base member; and
said conversion mechanism is formed to move said pair of claw members symmetrically.

6. A chuck device as described in any one of claim 2 through claim 5 wherein:
said claw member is mounted on an upper surface of said base member; and
said worm gear mechanism and said second gear mechanism are mounted in said base member.

7. A chuck device as described in any one of claim 2 through claim 6 wherein rotational drive force is applied manually to said input member.
